# EUROPEAN PATENT APPLICATION

(11) **EP 0 578 828 A1**
(43) Date of publication of application: **19.01.1994**
(21) Application number: 93901540.0
(22) Date of filing: 12.01.1993
(51) Int. Cl.: G05B 19/405

(54) **SCREEN DISPLAY METHOD FOR CNC**

(30) Priority: 28.01.1992 JP 12879/92
(71) Applicant: FANUC LTD., Minamitsuru-gun, Yamanashi 401-05 (JP)
(72) Inventor: MATSUMURA, Teruyuki, Fanuc Dai-3 Villa-karamatsu, Minamitsuru-gun, Yamanashi 401-05 (JP); SHINOZAKI, Satoru, Shimodate-shi, Ibaragi 308 (JP); ENDO, Takahiko, Fanuc Dai-3 Villa-Karamatsu, Minamitsuru-gun, Yamanashi401-05 (JP)
(74) Representative: Brunner, Michael John
(86) International application number: JP9300032
(87) International publication number: WO9315449

(57) **Abstract**

A machining program for CNC can be confirmed and selected easily by displaying it on as screen. The machining program list is displayed in the machining program area on the screen (step S1). The operator inputs commands as desired (step S2). If machining simulation is instructed, the simulation is executed (step S4). If the instruction is for drawing a product contour, it is executed (step S6). If display of the content of the program itself is instructed, the content of the program is displayed on the screen (step S8). Hence the content of the program can be easily confirmed and an instruction can be easily selected.

## Description

### TECHNICAL FIELD

The present invention relates to a screen display system for a CNC (computerized numerical control) apparatus for displaying a machining program of the CNC on a display screen, and more specifically, to a screen display system for an interactive type CNC.

### BACKGROUND ART

Recent CNCs have an internal memory with an increased capacity for storing a lot of machining programs therein and execute machining operation by selecting a necessary machining program in accordance with a workpiece to be machined. Then, there is provided a machining program list to enable an operator to confirm the machining programs stored in the internal memory of the CNC.

A screen of the machining program list displays the machining programs and the information thereof as only comments thereof. Therefore, in order to confirm the contents of a machining program, the machining program must be read out so that the contents thereof are displayed for confirmation or a machining configuration must be drawn.

Nevertheless, a key operation such as a selection of a screen and the like is necessary to select the machining program from a screen showing the machining program list and to display the contents thereof, and such an operation is complex.

Further, when a necessary program is to be selected from a lot of machining programs, a machining configuration is drawn by a selected machining program and then another machining program must be confirmed again by returning to the machining program list screen, which makes the operation more complex.

In particular, as the internal memory of a CNC has an increased capacity, the number of machining programs stored therein is also increased, and thus a problem arises in that a considerable amount of operation is necessary to select and display a desired program, which further increases a load imposed on an operator.

### DISCLOSURE OF THE INVENTION

Taking the above into consideration, an object of the present invention is to provide a screen display system for a CNC apparatus by which a machining program can be easily confirmed and selected.

To attain the above object, according to the present invention, there is provided a screen display system for a CNC apparatus for displaying a machining program on the display screen of the CNC, wherein a machining program display region for displaying the machining program and a window region are provided in the display screen, and machining program data corresponding to the machining program is displayed at the window region by selecting the machining program.

First, a machining program list stored in the internal memory of the CNC is displayed at the machining program display region of the display screen. Next, an operator selects one of the displayed machining programs and instructs to perform a desired display processing to the selected program. Then, the machining program data corresponding to the selected machining program is displayed at the window region based on a display processing command.

### BRIEF DESCRIPTION OF THE DRAWINGS

Figure 1 is a flowchart showing the process of a screen display system for a CNC according to the present invention;
Figure 2 is a block diagram showing the arrangement of an interactive type numerical control apparatus;
Figure 3 is a diagram showing an example of a display screen of a program list;
Figure 4 is a diagram showing an example of a machining simulation display screen;
Figure 5 is a diagram showing an example of a product configuration drawing display screen; and
Figure 6 is a diagram showing an example of a program content display screen.

### BEST MODE OF CARRYING OUT THE INVENTION

An embodiment of the present invention will be described below with reference to the drawings.

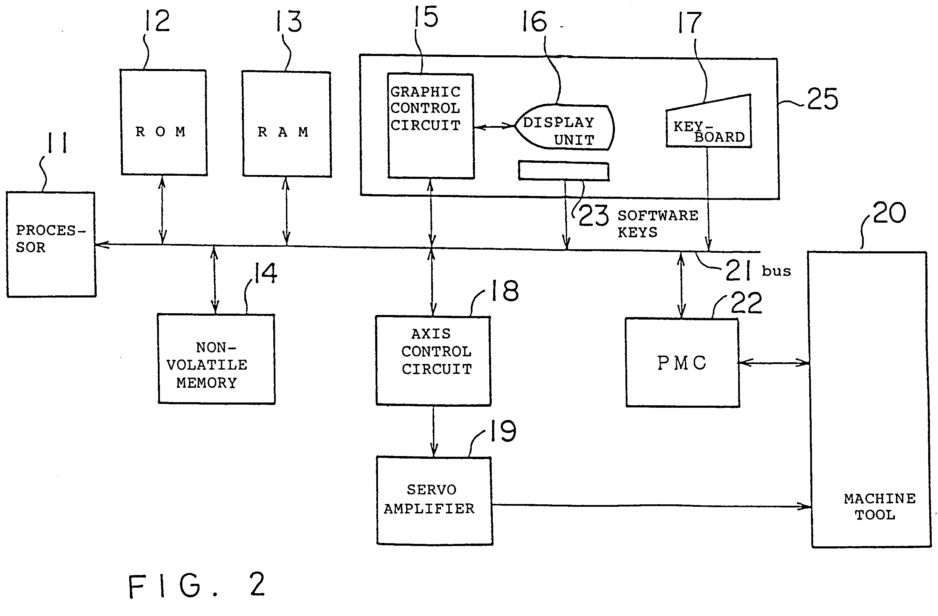

Figure 2 is a block diagram showing the arrangement of an interactive type numerical control apparatus embodying a screen display system for a CNC apparatus according to the present invention.

A processor (CPU) 11 controls the CNC as a whole in accordance with a system program stored in a ROM 12. The ROM 12 is composed of an EPROM or EEPROM. A RAM 13 composed of an SRAM or the like stores various kinds of data or I/O signals. A non-volatile memory 14 is composed of a CMOS supplied with power from a not shown battery and stores machining programs, macros, parameters, amounts of pitch error correction, amounts of tool correction, and the like which must be maintained even after a power supply to the CNC is cut off.

A graphic control circuit 15 converts a digital signal into a display signal and outputs the same to a display unit 16. The display unit 16 is composed of a CRT or liquid crystal display unit. The display unit 16 displays configurations, machining conditions and the like when a machining program is interactively created. The digital signal is supplied to the graphic control circuit 15 when the processor 11 executes a screen display processing program stored in the ROM 12 with respect to a machining program stored in the non-volatile memory 14.

A keyboard 17 is composed of cursor keys, configuration element keys, numerical keys and the like, and necessary figure data and machining data are input by using these keys.

An axis control circuit 18 receives an axis moving command from the processor 11 and outputs an axis command to a servo amplifier 19. Upon receiving the moving command, the servo amplifier 19 drives servo motors of a machine tool 20. These composing elements are interconnected to each other through a bus 21.

When a machining program is executed, a PMC (programmable machine controller) 22 receives a T function signal (tool selection command) and the like through the bus 21. Then, this signal is processed by a sequence program and output as an operation command to control the machine tool 20. Further, the PMC sequentially processes a state signal received from the machine tool 20 and transfers a necessary input signal to the processor 11 through the bus 21.

Further, software keys 23 whose function is changed by a system program and the like are connected to the bus 21. The software keys 23 are mounted on a CRT/MDI panel 25 together with the display unit 16 and keyboard 17.

The input screen of interactive type data displayed on the display unit 16 is stored in the ROM 12. When a machining program is created, the moving locus of a tool as a whole, and the like are displayed on the input screen of the interactive type data as a background animation. Further, jobs or data which can be set by the screens input to the display unit 16 are displayed thereon in a menu. An item of menus to be selected is input through the software keys 23 disposed at the lower portion of the screen in correspondence to the menus. Each of the software keys 23 has a different meaning to each screen. Note, various kinds of interactive data are stored in the RAM 13 or non-volatile memory 14.

Input data is processed by the processor 11 to create a machining program. Created program data is sequentially displayed on the display unit 16 used in an interactive fashion as a background animation. When the machining operation of the machine tool 20 is simulated, the machining program stored in the non-volatile memory 14 is also executed and displayed as a foreground animation.

An operation sequence of the screen display system for the CNC according to the present invention will be described below. This screen display system is a function realized by that the processor 11 executes a screen display processing program stored in the ROM 12.

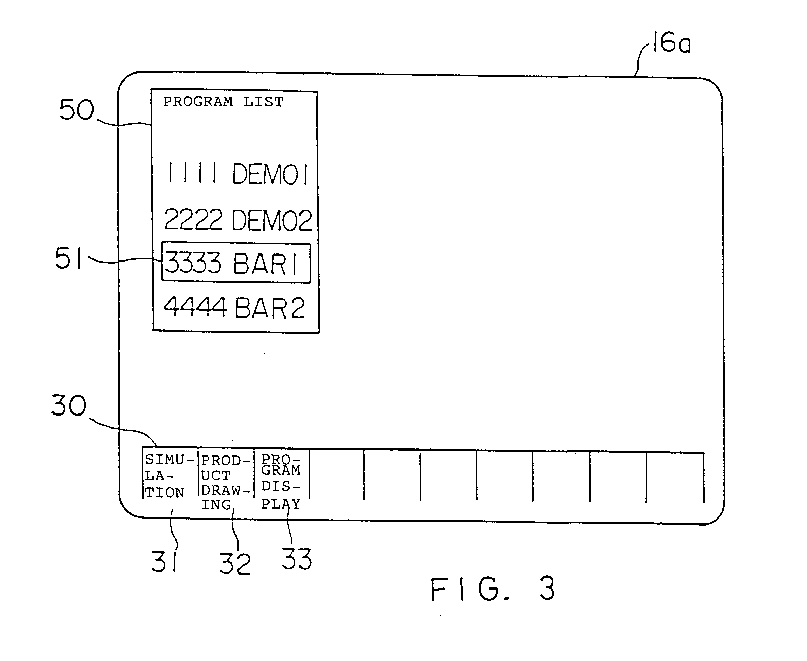

Figure 3 is a diagram showing an example of the display screen in the program list. In Figure 3, a display screen 16a is displayed on the display unit 16 shown in Figure 2. The display screen 16a displays a machining program list stored in the non-volatile memory 14 in a machining program display region 50. The machining program list in the machining program display region 50 displays the program number and brief comments of each machining program. At this time, a cursor 51, which displays a predetermined program number and comments, e.g., a program number "1111" and comments "DEMO1" displayed first in Figure 3, is displayed in an inverted form.

Further, software keys 30 as command keys through which an operator supplies a command to the numerical control apparatus are displayed at the lower portion of the display screen 16a. The software keys 30 correspond to command keys which are commanded by depressing the software keys 23 mounted on a CRT/MDI panel 25 and are composed of 10 keys each of which is provided with a command changing in accordance with contents to be processed. Figure 3 shows a machining simulation command key 31 for instructing the execution of a machining simulation, a product configuration drawing command key 32 for drawing the configuration of a workpiece and the configuration of a product produced by machining the workpiece, and a program display command key 33 for displaying the programmed contents of a machining program.

First, the operator inputs a machining program he desires to display at a window region to be described later of the display screen 16a by selecting the machining program through the cursor 51 or the program number thereof displayed at the machining program display region 50. This selection is executed through an input to the cursor keys or numerical keys of the keyboard 17 shown in Figure 2. For example, when the operator depresses the cursor key with a downward arrow of the keyboard 17 twice or inputs a program number "3333" through the numerical key, a machining program corresponding to this operation is selected. At this time, the cursor 51 moves to the program number "3333" and comments "BAR1" and displays them in an inverted form.

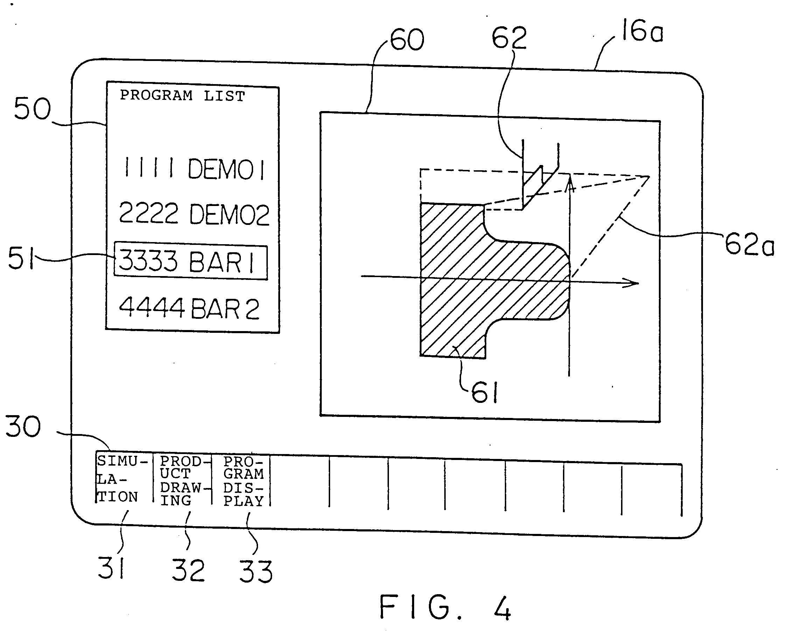

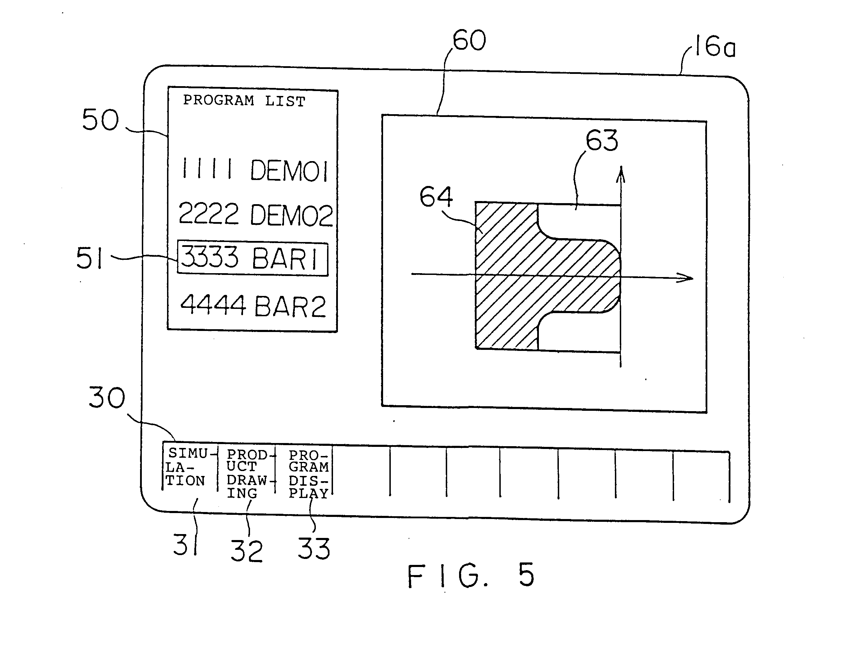

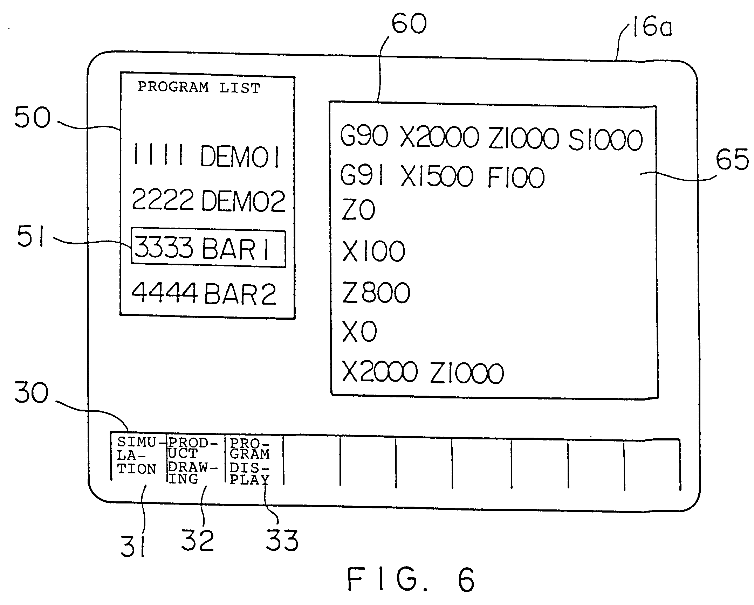

Next, the operator inputs a command for displaying the machining program data of the selected machining program at the window region through the software keys 30. For example, when the operator depresses a machining simulation command key 31, the display screen 16a changes to Figure 4. Further, when the operator depresses a product configuration drawing command key 32, the display screen 16a changes to Figure 5. Alternatively, when the operator depresses a program display command key 33, the display screen 16a changes to Figure 6.

Figure 4 is a diagram showing an example of a machining simulation display screen, wherein the display screen 16a displays the machining program display region 50, window region 60, and software keys 30. Note, the same numerals as used in Figure 3 are used to designate the same elements in Figure 4 and the description thereof is omitted.

The window region 60 displays the machining program data of a machining program. The widow region 60 displays the machining simulation of a workpiece in response to a command input through the simulation command key 31. More specifically, the window region 60 sequentially displays the workpiece 61 being machined by a tool 62 together with the moving path 62a of the tool 62 shown by a dotted line. Note, whether the workpiece 61 interferes with the tool 62 or not can be easily checked by the moving path 62a.

Figure 5 shows an example of a product configuration drawing display screen, wherein the display screen 16a displays the machining program display region 50, window region 60, and software keys 30. Note, the same numerals as used in Figure 4 are used to designate the same elements in Figure 5 and the description thereof is omitted.

The window display region 60 displays a workpiece 63 and a product configuration 64 as the machined configuration of the workpiece 63 in response to a command input through the product configuration drawing command key 32. These workpiece 63 and product configuration 64 are interactively input and displayed based on the configuration data stored in the RAM 13 of Figure 2.

Figure 6 shows an example of a program content display screen, wherein the display screen 16a displays the machining program display region 50, window region 60, and software keys 30. Note, the same numerals as used in Figure 4 are used to designate the same elements in Figure 6 and the description thereof is omitted.

The window region 60 displays the programmed contents 65 of a machining program in response to a command input through the program display command key 33. The programmed contents 65 correspond to the contents of the machining program stored in the non-volatile memory 14 of Figure 2 and sequentially scrolled and displayed in the upper direction of the screen of the window region 60.

In the scroll display, the operator can temporarily stop the scroll by depressing a predetermined key of the keyboard 17. With this function, the operator can securely confirm the desired portion of the programmed contents 65.

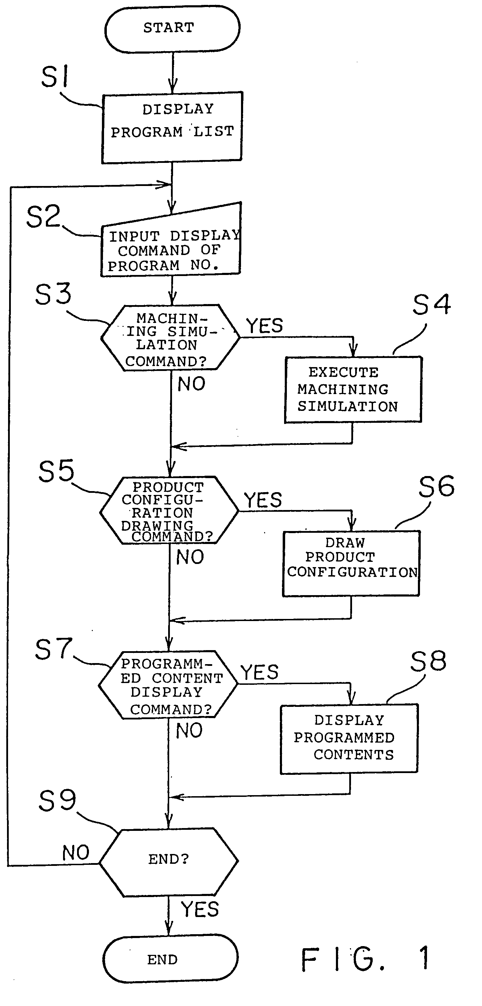

Figure 1 is a flowchart showing the process of a screen display system for a CNC according to the present invention. This process is a function realized by the processor 11 executing the processing program stored in the ROM 12 of Figure 2. In Figure 1, numerals prefixed with an "S" indicate the numbers of steps of the process.
[S1] The machining program list is displayed on the screen. More specifically, as shown in Figure 3, the machining program list stored in the non-volatile memory 14 is displayed at the machining program display region 50.
[S2] The operator inputs the display command of the program number and machining program data of a machining program to be displayed on the display screen 16a through the keyboard 17 or the like.
[S3] Whether the display command of the machining program data is a machining simulation command or not is determined. If, it is the machining simulation command, the flow goes to step S4, and if not, the flow goes to step S5.
[S4] A machining simulation is executed. More specifically, as shown in Figure 4, the machining simulation of a workpiece is sequentially and graphically displayed at the window region 60.
[S5] Whether the display command of the machining program data is a product configuration drawing command or not is determined. If it is the product configuration drawing command, the flow goes to step 6, and if not, the flow goes to step S7.
[S6] A product configuration is drawn. More specifically, as shown in Figure 5, the machining configuration of a workpiece is graphically displayed at the window region 60.
[S7] Whether the display command of the machining program data is a programmed content display command or not is determined. If it is the programmed content display command, the flow goes to step S8, and if not, the flow goes to step S9.
[S8] The programmed contents are displayed. More specifically, as shown in Figure 6, the programmed contents of a machining program are scrolled and displayed at the window region 60.
[S9] Whether the processing program is to be ended or not is determined. If it is to be ended, the processing program is ended, and if not so, the flow returns to step S2.

As described above, since the display screen 16a is provided with the machining program display region 50 for displaying the machining program list and the window region 60 for displaying the machining program data so that the machining program data of a selected machining program is displayed at the window region 60, the contents of the machining program can be easily confirmed and further selecting operation can be easily executed.

Although the present invention is applied to the interactive type numerical control apparatus in the above description, it may also be applied to an interactive type program creation apparatus in the same way.

Further, although a machining program is selected through the keyboard 17 or software keys 30, it may be selected by supplying a command to other input means such as, for example, a command key referred to as "an icon" for performing a graphical display on the display screen 16a through a pointing device such as a mouse or the like.

Further, although the program number of an input machining program and brief comments corresponding to the program number are displayed by being inverted by the cursor, they may be displayed by a flashing display system or high luminance display system so that the machining program selected can be recognized at a glance.

Then, although the workpiece 61 being machined by the tool 62 is sequentially displayed together with the moving path 62a in the machining simulation executed in response to the command input through the machining simulation command key 31, the tool 62 or moving path 62a may not be displayed, when not necessary.

Furthermore, although the product configuration 64 is displayed together with the configuration of the workpiece 63 in the display of the product configuration 64 executed in response to the command input through the product configuration drawing command key 32, only the product configuration 64 may be displayed.

As described above, according to the present invention, since there are provided the machining program region for displaying the machining program list and the window region for displaying machining program data so that the machining program data of a selected machining program can be displayed, the contents of the machining program can be easily confirmed and further selecting operation can be easily executed.

## Claims

1. A screen display system for a CNC apparatus for displaying a machining program on the display screen of the CNC, wherein a machining program display region for displaying said machining program and a window region are provided in said display screen, and machining program data corresponding to said machining program is displayed on said window region by selecting said machining program.

2. A screen display system for a CNC apparatus according to claim 1, wherein said machining program data is a workpiece machining simulation.

3. A screen display system for a CNC apparatus according to claim 1, wherein said machining program data is a workpiece machining configuration.

4. A screen display system for a CNC apparatus according to claim 1, wherein said machining program data are the contents to be machined of said machining program.
